# EUROPEAN PATENT APPLICATION

(11) **EP 4 660 021 A1**
(43) Date of publication of application: **10.12.2025**
(21) Application number: 24180676.9
(22) Date of filing: 07.06.2024
(51) Int. Cl.: B60S 1/50, B60R 19/20, B62D 21/16

(54) **VEHICLE AND FUNCTIONAL ENTITY OF OR FOR A VEHICLE COMPRISING A LIQUID STORAGE CONTAINER**

(71) Applicant: HELLA Saturnus Slovenija d.o.o., 1001 Ljubljana (SI)
(72) Inventor: TEKAVCIC, Andraz, 4000 Kranj (SI); WAGNER, Andrej, 1000 Ljubljana (SI)
(74) Representative: Behr-Wenning, Gregor

(57) **Abstract**

The present invention relates to a vehicle (28), comprising a vehicle body (12), at least one deformation zone (20) for absorbing energy in case of a crash, the deformation zone (20) being formed by the vehicle body (12), and a liquid storage container (24) arranged in the deformation zone (20). Beyond that, the present invention relates to a functional entity (30) of or for such a vehicle (28), comprising a liquid storage container (24) arranged in the deformation zone (20) when mounted to the vehicle (28) or the to the vehicle body (12).

## Description

The present invention relates to a vehicle and a functional entity of or for a vehicle, the vehicle or the functional entity comprising a liquid storage container.

### PRIOR ART

The available space in vehicles is typically scarce. This situation aggravates as the number of components, in particular electronic components for driver assistance systems, is constantly increasing. At the same time, a certain volume of liquids should be stored inside the vehicle. One example of such liquids may be a cleaning fluid for cleaning the windscreen or other outer surfaces of the vehicle. The cleaning fluid is typically water or water-based. Due to the limited and often labyrinthine available space in vehicles, the containers in which the liquids are stored, in the following referred to as "liquid storage containers", are relatively small and of complex shape. As a result, the cleaning fluid has to be refilled relatively often and the manufacture of the containers is expensive due to the complex shape.

### DISCLOSURE OF THE INVENTION

It is one task of one embodiment of the present invention to present a vehicle by which the situation described can be improved. In particular, the vehicle should comprise containers for storing liquids that provide a higher storage volume and are of simpler shape compared to the containers known from the prior art. Furthermore, an embodiment of the present invention has the object to provide a functional entity that can be mounted in such a vehicle.

The task is solved by the features specified in claims 1 and 6. Advantageous embodiments are the subject of the dependent claims.

One embodiment of the present invention is directed to a vehicle, comprising
- a vehicle body,
- at least one deformation zone for absorbing energy in case of a crash, the deformation zone being formed by the vehicle body, and
- at least one liquid storage container arranged in the deformation zone.

To fulfil current safety requirements, modern vehicles are equipped with a deformation zone for absorbing energy in case of a crash. Such a deformation zone is also referred to as crumple zone or crush zone. These zones are typically empty or filled with a deformable foam.

According to the present disclosure, at least one liquid storage container in which liquids for cleaning the windscreen, the headlamp or the like can be stored is placed in the deformation zone of the vehicle. As previously noted, these deformation zones are typically empty or filled with a deformable foam to avoid interference with the desired deformation of the vehicle body in case of a vehicle crash. Thus, a fairly large volume is available in which a voluminous container can be placed which needs to be refilled less frequently. Moreover, the shape of the container can be kept simple as the deformation zone is typically not or only slightly labyrinthine.

According to another embodiment the container comprises a container wall enclosing a receiving volume for receiving the liquid, the container wall being at least partially deformable and/or comprising a rupture panel. In case of a crash the container does not adversely affect the deformation of the vehicle body. In contrast, the container wall may also absorb some of the energy upon deformation, thereby improving the crash safety of the vehicle. If the deformation of the container during a vehicle crash exceeds a certain degree, the container wall and/or the rupture panel may break and the water may leak out of the container which, however, is acceptable as the liquid is released to the environment anyway.

In a further embodiment the rupture panel is removably fastened to the container wall. Depending on the scope of the vehicle crash, the vehicle body may be repaired instead of scrapping the entire vehicle. In this case, only the rupture panel needs to be replaced while the remaining container is unaffected. The repair is thus facilitated.

In another embodiment the vehicle comprises a functional entity arranged adjacent to the deformation zone, wherein the container is fastened to the functional entity or formed by the functional entity. In this embodiment the container can either be fastened to a functional entity of the vehicle or is formed by the same. The mounting of the vehicle is thereby kept simple.

In accordance with a further embodiment the functional entity comprises an illumination unit, a sensor, a radiator, an actuator and/or an external trim part of the vehicle. Functional entities of modern vehicles combine a plurality of functions. An example of such a functional entity is a so called "front phygital shield". The term "phygital" is a compound word of "physical" and "digital". Such shields may comprise illumination units like headlamps or decorative illuminated sections such as the brand logo of the vehicle manufactured, but also comprise sensors used for driver assistance systems. Such a functional entity is usually one part that can be fastened to the vehicle body by very few steps, thereby facilitating the mounting. The deformation zone is typically located adjacent to such a functional entity. Therefore, the integration of the container into such a functional entity or the fastening to the same allows for the desired arrangement of the container with little effort.

According to another embodiment, the illumination unit comprises at least one light source, the light source being arranged relative and/or thermally connected to the container such that the liquid can exhibit a cooling function on the light source. In operation, light sources typically generate heat which has a disadvantage effect on the light source itself but sometimes also to adjacently arranged components. The heat may reduce the life span of the light source. Components may be deformed, fatigued or even inflamed by the heat. As mentioned, the liquid is typically water or water-based and can thus be used as a coolant. The light source can for example be arranged on the container wall and thus adjacent to the liquid, thereby enabling a heat transfer from the light source into the liquid. In case the light source cannot be arranged adjacently to the liquid, a thermally conductive material such as a paste or cable can be used for transferring the heat from the light source into the liquid. Alternatively, or in addition, a heatsink may be provided within the deformation zone that can additionally be used for the heat transfer away from the light source. The adverse effects of the heat generated by the light source as previously described can thereby be attenuated.

Another aspect of the invention is directed towards a functional entity of or for a vehicle according one of the embodiments previously described, comprising a liquid storage container arranged in the deformation zone when mounted to the vehicle or the to the vehicle body.

The technical effects and advantages as discussed with regard to the present vehicle to a large extent equally apply to the functional entity. Briefly, the proposed arrangement of the container allows for a fairly large container volume and for simple container shapes.

In another embodiment the functional entity comprises an illumination unit, a sensor, a radiator and/or an external trim part of the vehicle. As noted, functional entities of modern vehicles combine a plurality of functions and are often located adjacent to the deformation zone. Therefore, the integration of the container into such a functional entity or the fastening to the same allows for the desired positioning of the container with little effort.

### PREFERRED EMBODIMENTS OF THE INVENTION

The present invention is described in detail with reference to the drawings attached wherein
- Figure 1: is a principle side view of a vehicle known from the prior art,
- Figure 2: is a principle side view of an embodiment of a vehicle according to the present invention,
- Figure 3A: is a perspective view of a functional entity of a vehicle according to a first embodiment of the present invention, and
- Figure 3B: is a sectional view through the functional entity shown in Figure 3A, and
- Figure 4: is a sectional view through a second embodiment of the functional entity.

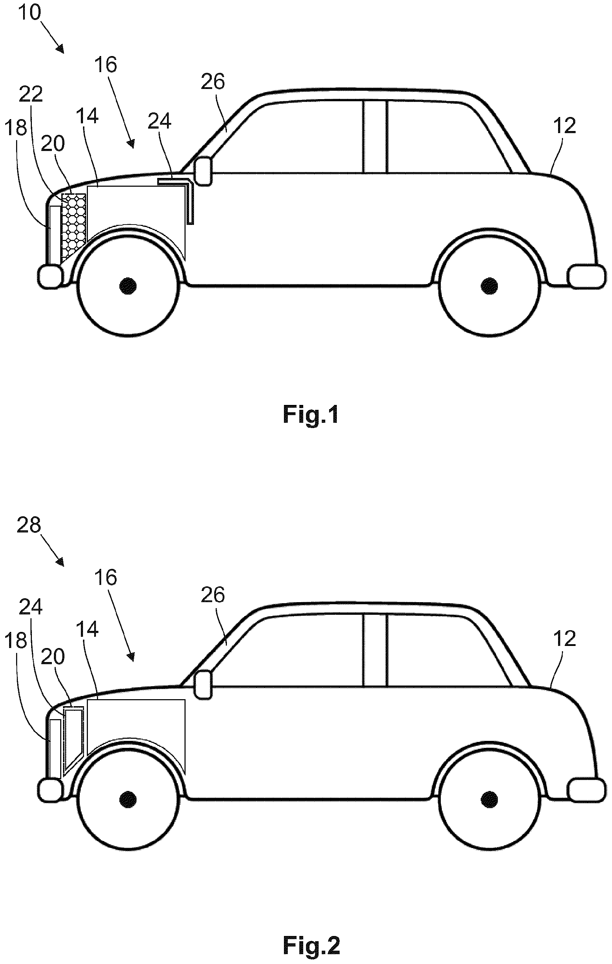

Figure 1 shows a vehicle 10 known from the prior art by means of a principle side view. The vehicle 10 is equipped with a vehicle body 12 and comprises an engine 14 located in an engine compartment 16 surrounded by the vehicle body 12. A headlamp 18 is arranged in front of the vehicle 10. A deformation zone 20 for absorbing energy in case of a vehicle crash is positioned between the headlamp 18 and the engine 14. The deformation zone 20 is filled with a deformable foam 22.

Moreover, the vehicle 10 is provided with a liquid storage container 24 that is arranged near the A-pillar 26 of the vehicle 10. The liquid can be a cleaning fluid that may be used for cleaning the windscreen and/or the headlamp 18 of the vehicle 10. Due to the limited available space, the container 24 has a complex shape which leads to increased production costs. Moreover, the receiving volume provided by the container 24 is relatively small such that the container 24 needs to be refilled in short intervals.

Figure 2 shows a vehicle 28 according to an embodiment of the present invention. The basic design of the vehicle 28 shown in Figure 2 is mostly similar to the one according to Figure 1 so only the main differences will be discussed in the following. The container 24 is arranged inside the deformation zone 20 between the headlamp 18 and the engine 14. The deformation zone 20 may be filled with a deformable foam 22, however, in the embodiment shown in Figure 2, the deformation zone 20 is free of the deformable foam 22. The receiving volume of the container 24 is considerably bigger and its shape more straightforward compared to the container 24 of the vehicle 28 shown in Figure 1. Consequently, the manufacturing costs of the container 24 of the vehicle 28 according to the invention can be kept low.

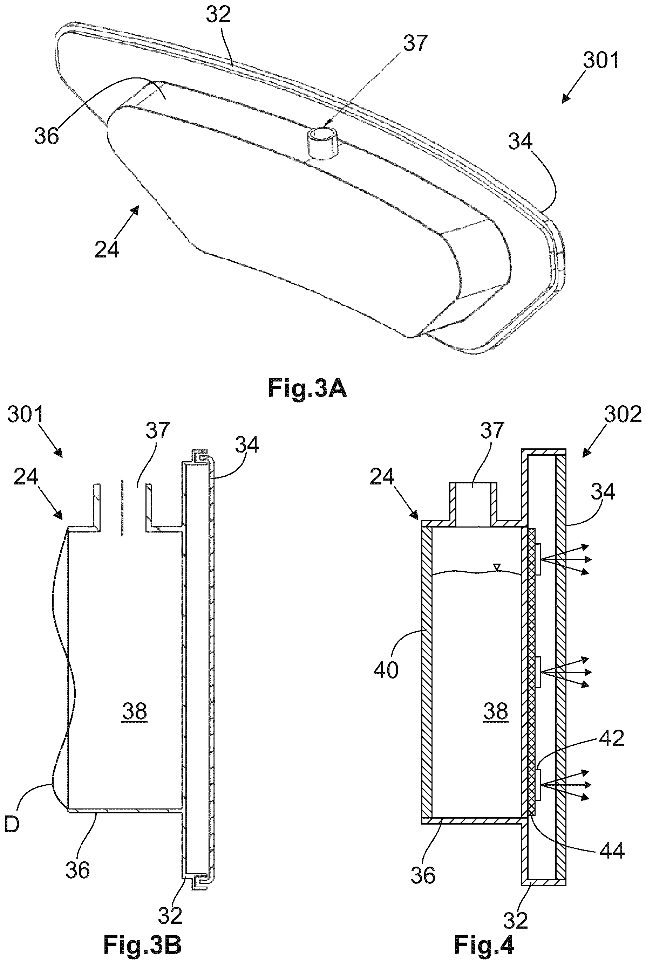

Figures 3A and 3B show a first embodiment of a functional entity 301 according to the invention which may be integrated into a given vehicle 28, e.g., in a vehicle 28 as shown in Figure 2. In this case the functional entity 30 comprises an illumination unit 32 for an illuminated panel 34. It should be noted that the functional entity 30 may comprise further components like headlamps, sensors, radiators, actuators and the like which are not shown in Figures 3A and 3B.

The container 24 is an integral part of the functional entity 30 and comprises a container wall 36 forming a filling port through which the liquid can be filled into the receiving volume 38 of the container 24. The container wall 36 is at least partially deformable as illustrated by the line D. The deformation may result from a vehicle crash. Depending on the magnitude of the impact, the container wall 36 may stay tight. If the impact exceeds a certain threshold, the container wall 36 may break and the liquid may leak out of the container 24.

Figure 4 shows a second embodiment of the functional entity 302 which is to a large extent similar to the functional entity 30 shown in Figures 3A and 3B. However, the container 24 comprises a rupture panel 40 that is releasably fastened to the container wall 36. In case of a vehicle crash the rupture panel 40 may break while the remaining container 24 remains intact. The rupture panel 40 may be replaced by a new one without great effort.

In the second embodiment of the functional entity 302, the illumination unit 32 comprises in total three light sources 42 that comprise LEDs which are mounted on a printed circuit board 44. The number of light sources 42 and of the LEDs can be chosen according to the specific application and is not limited to the mentioned number. The printed circuit board 44 is fastened to the container wall 32 such that the liquid can exhibit a cooling effect on the light sources 42. The liquid thus acts as a kind of heat sink. To increase the cooling effect on the light sources 42, thermally conductive wires, thermal paste (not shown) or similar means can be provided. A separate heat sink (not shown), for example an aluminum heat sink, may be disposed within the deformation zone that is in thermal interaction with the light source 42. The heat sink may be mounted to the vehicle body 12 or to the container wall 36.

### REFERENCE LIST

- 10: vehicle known from the prior art
- 12: vehicle body
- 14: engine
- 16: engine compartment
- 18: headlamp
- 20: deformation zone
- 22: deformable foam
- 24: container
- 26: A-pillar
- 28: vehicle according to the invention
- 30, 301, 302: functional entity
- 32: illumination unit
- 34: illuminated panel
- 36: container wall
- 37: filling port
- 38: receiving volume
- 40: rupture panel
- 42: light source
- 44: printed circuit board

- D: line

## Claims

1. Vehicle (28), comprising
- a vehicle body (12),
- at least one deformation zone (20) for absorbing energy in case of a crash, the deformation zone (20) being formed by the vehicle body (12), and
- a liquid storage container (24) arranged in the deformation zone (20).

2. Vehicle (28) according to claim 1,
**characterized in that** the container (24) comprises a container wall (36) enclosing a receiving volume for receiving the liquid, the container wall (36) being at least partially deformable and/or comprising a rupture panel (40).

3. Vehicle (28) according to claim 2,
**characterized in that** the rupture panel (40) is removably fastened to the container wall (36).

4. Vehicle (28) according to one of the preceding claims,
**characterized in that** the vehicle (28) comprises a functional entity (30) arranged adjacent to the deformation zone (20), wherein the container (24) is fastened to the functional entity (30) or formed by the functional entity (30).

5. Vehicle (28) according to claim 4,
**characterized in that** the functional entity (30) comprises an illumination unit (32), a sensor, a radiator and/or an external trim part of the vehicle (28).

6. Vehicle (28) according to claim 5,
**characterized in that** the illumination unit (32) comprises at least one light source (42), the light source (42) being arranged relative and/or thermally connected to the container (24) such that the liquid can exhibit a cooling function on the light source (42).

7. Functional entity (30) of or for a vehicle (28) according one of the preceding claims, comprising a liquid storage container (24) arranged in the deformation zone (20) when mounted to the vehicle (28) or the to the vehicle body (12).

8. Functional entity (30) according to claim 7,
**characterized in that** the functional entity (30) comprises an illumination unit (32), a sensor, a radiator and/or an external trim part of the vehicle (28).
